# DEMANDE DE BREVET EUROPEEN

(11) **EP 0 891 026 A1**
(43) Date de publication de la demande: **13.01.1999**
(21) Numéro de dépôt: 98410065.1
(22) Date de dépôt: 09.06.1998
(51) Int. Cl.: H02B 1/20, H01R 9/26

(54) **Dispositif d'alimentation et d'assemblage d'une pluralité d'appareils electriques**

(30) Priorité: 25.06.1997 FR 9708243
(71) Demandeur: SCHNEIDER ELECTRIC SA, 92100 Boulogne Billancourt (FR)
(72) Inventeur: Canali, Pascal, 38050 Grenoble cedex 09 (FR); Pellicano, Joseph, 38050 Grenoble cedex 09 (FR)
(74) Mandataire: Ritzenthaler, Jacques

(57) **Abrégé**

La présente invention concerne un dispositif d'alimentation et d'assemblage d'une pluralité d'appareils électriques tels des disjoncteurs et modules auxiliaires alignés sur un rail de montage.

Ce dispositif comprend un moyen de raccordement tel un peigne (6), comportant une succession de dents de connexion (9) réparties longitudinalement à intervalles prédéterminés pour l'introduction dans les bornes d'alimentation correspondantes (2) situées sur les faces latérales étroites (4) desdits appareils. Ce moyen de raccordement comporte au moins une dent (9) sur laquelle est fixé un ressort (10) destiné à coopérer avec une paroi (14) de la borne correspondante (2) de l'appareil pour assurer la pression de contact entre la dent (9) et la plage de raccordement (15) correspondante de l'appareil.

## Description

La présente invention concerne un dispositif d'assemblage et d'alimentation d'une pluralité d'appareils électriques tels des appareils de puissance et des blocs auxiliaires fixés sur un rail de montage et ayant des boîtiers modulaires accolés côte à côte, comprenant un moyen commun de raccordement de l'ensemble des appareils électriques de puissance s'étendant parallèlement à la direction longitudinale du rail et ayant une succession de dents de connexion réparties longitudinalement à intervalles prédéterminés pour l'introduction dans les bornes d'alimentation correspondantes desdits appareils.

Un dispositif du genre précédemment mentionné est décrit dans le brevet FR 2.644.300 de la demanderesse. Dans ce document, les bornes d'alimentation de l'ensemble des disjoncteurs et autres appareils de puissance, à l'exclusion des modules auxiliaires d'une même rangée sont interconnectées par un peigne de raccordement commun. Les dents saillantes du peigne s'étendent perpendiculairement à la direction longitudinale dudit peigne et pénètrent dans les cages correspondantes des bornes d'alimentation. La pression de contact entre les dents du peigne et les plages de raccordement des appareils est obtenue par serrage des vis de bornes accessibles à travers des ouvertures circulaires prévues sur la face avant des boîtiers. On voit donc que dans cette réalisation, pour obtenir la pression de contact souhaitée, il est nécessaire de visser successivement toutes les vis de bornes des appareils utilisés.

La présente invention résout ce problème et propose un dispositif d'alimentation et d'assemblage d'une pluralité d'appareils électriques, permettant de raccourcir considérablement le temps de connexion et pouvant être utilisé sur des appareils standards.

A cet effet, la présente invention a pour objet un dispositif du genre précédemment mentionné caractérisé en ce que le moyen de raccordement précité comporte au moins une dent sur laquelle est fixé un ressort destiné à coopérer avec une paroi de la borne correspondante de l'appareil pour assurer la pression de contact entre la dent et la plage de raccordement correspondante de l'appareil. Ainsi, la pression de contact souhaitée est obtenue sans utiliser la vis de borne.

Mais d'autres avantages et caractéristiques de l'invention apparaîtront mieux dans la description détaillée qui suit et se réfère aux dessins annexés donnés uniquement à titre d'exemple et dans lesquels :

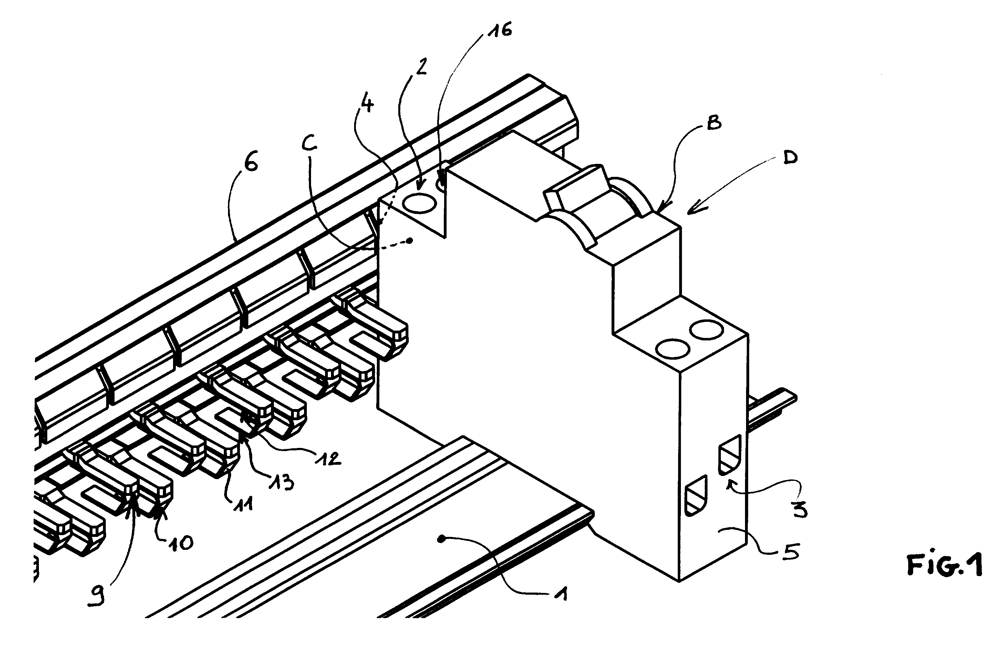

- La figure 1 est une vue partielle en perspective, illustrant latéralement un disjoncteur alimenté par un dispositif selon l'invention,

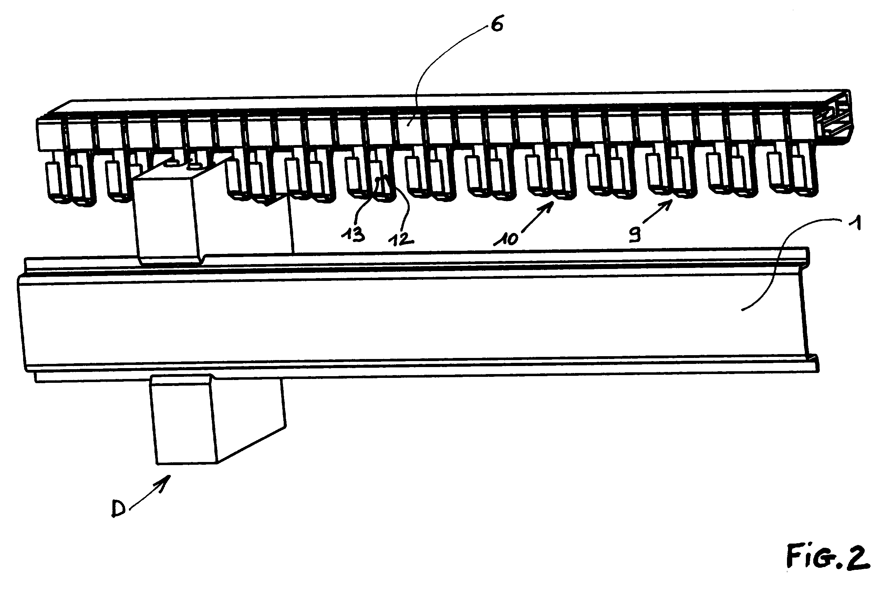

- La figure 2 est une vue en perspective de l'arrière du même appareil alimenté par le dispositif de l'invention et,

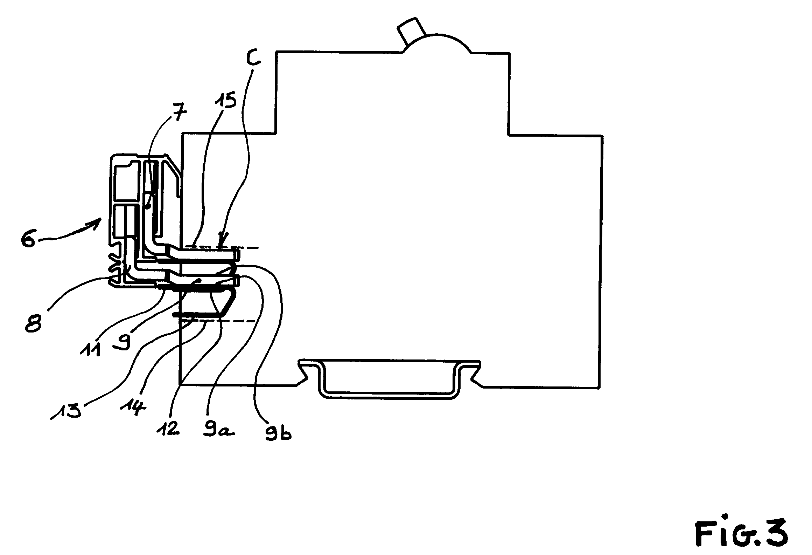

- la figure 3 est une vue en coupe longitudinale des figures précédentes.

Sur les figures, on voit un disjoncteur électrique D à boîtier modulaire, fixé sur un rail de montage 1 et destiné à être accolé côte à côte avec d'autres appareils de puissance ou modules auxiliaires notamment de déclenchement, de commande, et de signalisation (non représentés) de manière à former une rangée horizontale.

Chacun des appareils de puissance comporte, de manière connue en soi, une borne d'alimentation 2 et une borne de ligne 3 ou de départ, situées respectivement sur les faces latérales étroites opposées 4, 5 du boîtier modulaire B. Les bornes d'alimentation de l'ensemble des disjoncteurs et autres appareils de puissance, à l'exclusion des modules auxiliaires d'une même rangée sont interconnectés par un peigne de raccordement commun 6. Ce peigne 6 comporte deux barres 7, 8 s'étendant parallèlement à la direction du rail 1 et destinées à véhiculer respectivement une phase et le neutre. Chaque barre 7, 8 supporte un certain nombre de dents de connexion 9 réparties longitudinalement à intervalles réguliers et s'étendant perpendiculairement à la direction desdites barres 7, 8 en direction des cages C correspondantes (non représentées) des appareils.

Selon l'invention, à chacune des dents 9 est associé un ressort de pression de contact 10. Ce ressort 10 se présente sous la forme d'une lame élastique 11 pliée sensiblement en forme de U. Cette lame 11 présente une première branche 12 fixée par clipsage ou soudage sur la face arrière 9a de la dent de peigne 9, opposée à la face de contact 9b de la dent 9 et une seconde branche 13 plus courte que la première destinée à coopérer avec une paroi 14 de la cage de borne.

L'opération de raccordement du peigne 6 s'effectue en introduisant les dents 9 équipées de leurs ressorts respectifs 10 dans les cages correspondantes C des appareils. Chaque ensemble constitué d'une dent 9 et de son ressort 10 est interposé entre la plage de raccordement 15 correspondante de l'appareil et la paroi 14 de la cage C opposée à la vis 16. Ainsi, chaque dent 9 est appliquée, en permanence, contre la plage de raccordement 15 de l'appareil grâce au ressort 10 de pression de contact dont les contraintes élastiques sont déterminées de manière à assurer une pression de contact suffisante entre la dent 9 et la plage 15.

On notera que les bornes des appareils standards pourront indifféremment recevoir un peigne à ressorts conforme à l'invention, un peigne standard, un ou plusieurs câbles où bien un peigne à ressorts et des câbles.

On a donc réalisé grâce à l'invention, un dispositif d'assemblage et d'alimentation permettant d'assurer en une seule opération le raccordement amont de tous les appareils et le serrage des dents de peigne contre les plages de raccordement, les appareils pouvant être des appareils standards ou autres.

## Revendications

1. Dispositif d'assemblage et d'alimentation d'une pluralité d'appareils électriques tels des appareils de puissance et des blocs auxiliaires fixés sur un rail de montage et ayant des boîtiers modulaires accolés côte à côte, comprenant un moyen commun de raccordement de l'ensemble des appareils électriques de puissance s'étendant parallèlement à la direction longitudinale du rail et ayant une succession de dents de connexion réparties longitudinalement à intervalles prédéterminés pour l'introduction dans les bornes d'alimentation correspondantes desdits appareils, caractérisé en ce que le moyen de raccordement précité comporte au moins une dent (9) sur laquelle est fixé un ressort (10) destiné à coopérer avec une paroi (14) de la borne correspondante (2) de l'appareil pour assurer la pression de contact entre la dent (9) et la plage de raccordement (15) correspondante de l'appareil.

2. Dispositif selon la revendication 1, caractérisé en ce que le ou chaque ressort (10) comprend une lame élastique (11) pliée sensiblement en forme de U, dont l'une (12) des branches (12, 13) est fixée sur la dent (9) tandis que l'autre branche (13) est destinée à venir en appui sur une paroi intérieure (14) de la borne (2) en position connectée du peigne (6).

3. Dispositif selon la revendication 1 ou 2, caractérisé en ce que la ou chaque borne (2) d'alimentation comporte une cage à vis et en ce que le ou chaque ressort (10) prend appui sur la paroi (14) de la cage opposée à la vis (16).

4. Dispositif selon l'une quelconque des revendications 1 à 3, caractérisé en ce que le ou chaque ressort (10) est fixé sur la dent correspondante (9), par clipsage.

5. Dispositif selon l'une quelconque des revendications 1 à 3, caractérisé en ce que le ou chaque ressort (10) est fixé sur la dent correspondante (9) par soudage.

6. Dispositif selon l'une quelconque des revendications 1 à 5, caractérisé en ce que le moyen de raccordement est un peigne de raccordement.
